# EUROPEAN PATENT APPLICATION

(11) **EP 4 307 814 A1**
(43) Date of publication of application: **17.01.2024**
(21) Application number: 22766204.6
(22) Date of filing: 02.03.2022
(51) Int. Cl.: H04W 72/12, H04L 5/00

(54) **INFORMATION FEEDBACK METHOD AND APPARATUS, INFORMATION SENDING METHOD AND APPARATUS, AND TERMINAL AND NETWORK SIDE DEVICE**

(30) Priority: 09.03.2021 CN 202110257236
(71) Applicant: Vivo Mobile Communication Co., Ltd., Dongguan, Guangdong 523863 (CN)
(72) Inventor: HONG, Qi, Dongguan, Guangdong 523863 (CN); LI, Gen, Dongguan, Guangdong 523863 (CN); ZENG, Chaojun, Dongguan, Guangdong 523863 (CN); LI, Can, Dongguan, Guangdong 523863 (CN)
(74) Representative: Murgitroyd & Company
(86) International application number: PCT/CN2022/078804
(87) International publication number: WO 2022/188678

(57) **Abstract**

The embodiment of the present application discloses an information feedback method and apparatus, an information sending method and apparatus, a terminal and a network side device, belonging to the technical field of communication. The specific implementation solution includes: receiving at least one piece of DCI; dividing, into multiple PDSCH subsets, a PDSCH set scheduled by each DCI; determining a downlink assignment index DAI corresponding to each of the PDSCH subsets; and feeding back a HARQ-ACK for the multiple PDSCH subsets according to the DAI corresponding to each of the PDSCH subsets.

## Description

### CROSS-REFERENCE TO RELATED APPLICATION

This application claims priority to Chinese Patent Application No. 202110257236.3, filed on Tuesday, March 9, 2021 in China, which is incorporated herein by reference in its entirety.

### TECHNICAL FIELD

This application belongs to the field of communications technology, and specifically relates to an information feedback method and apparatus, an information sending method and apparatus, a terminal and a network side device.

### BACKGROUND

In the existing communications system, in order to avoid waste of resources, a solution of scheduling multiple physical downlink shared channels (Physical Downlink Shared Channel, PDSCH) through one piece of downlink control information (Downlink Control Information, DCI) is introduced. In this solution, due to the increase of subcarrier spacing (Sub Carrier Spacing, SCS), the duration of each slot will be shorter, and therefore it can be considered that channel conditions experienced by data in adjacent slots are similar. In this case, the probabilities of correct decoding/wrong decoding of data in adjacent slots should be consistent. In this case, how to feed back a hybrid automatic repeat request-acknowledge (Hybrid Automatic Repeat reQuest-Acknowledge, HARQ-ACK) for the scheduled multiple PDSCHs is an urgent problem to be solved at present.

### SUMMARY

The embodiments of the present application provide an information feedback method and apparatus, an information sending method and apparatus, a terminal and a network side device, which can solve the problem of how to feed back a HARQ-ACK for scheduled multiple PDSCHs in a case that a single piece of DCI schedules multiple PDSCHs.

According to a first aspect, an information feedback method is provided, performed by a terminal, and the method includes:
receiving at least one piece of DCI;
dividing, into multiple PDSCH subsets, a PDSCH set scheduled by each DCI;
determining a downlink assignment index DAI corresponding to each of the PDSCH subsets; and
feeding back a HARQ-ACK for the multiple PDSCH subsets according to the DAI corresponding to each of the PDSCH subsets.

According to a second aspect, an information sending method is provided, performed by a network side device, and the method includes:
sending at least one piece of DCI to a terminal;
where the at least one piece of DCI is used by the terminal to divide, into multiple PDSCH subsets, a PDSCH set scheduled by each DCI, determine a DAI corresponding to each of the PDSCH subsets, and feed back a HARQ-ACK for the multiple PDSCH subsets according to the DAI corresponding to each of the PDSCH subsets.

According to a third aspect, an information feedback apparatus is provided, applied to a terminal, and the apparatus includes:
a receiving module, configured to receive at least one piece of DCI;
a division module, configured to divide, into multiple PDSCH subsets, a PDSCH set scheduled by each DCI;
a first determining module, configured to determine a DAI corresponding to each of the PDSCH subsets; and
a feedback module, configured to feed back a HARQ-ACK for the multiple PDSCH subsets according to the DAI corresponding to each of the PDSCH subsets.

According to a fourth aspect, an information sending apparatus is provided, applied to a network side device, and the apparatus includes:
a sending module, configured to send at least one piece of DCI to a terminal;
where the at least one piece of DCI is used by the terminal to divide, into multiple PDSCH subsets, a PDSCH set scheduled by each DCI, determine a DAI corresponding to each of the PDSCH subsets, and feed back a HARQ-ACK for the multiple PDSCH subsets according to the DAI corresponding to each of the PDSCH subsets.

According to a fifth aspect, a terminal is provided. The terminal includes a processor, a memory, and a program or an instruction stored in the memory and executable on the processor, and when the program or the instruction is executed by the processor, the steps of the method according to the first aspect are implemented.

According to a sixth aspect, a network side device is provided, where the network side device includes a processor, a memory, and a program or an instruction stored in the memory and executable on the processor, and when the program or the instruction is executed by the processor, steps of the method according to the second aspect are implemented.

According to a seventh aspect, a readable storage medium is provided, where the readable storage medium stores a program or an instruction, and when the program or the instruction is executed by a processor, steps of the method according to the first aspect or the second aspect are implemented.

According to an eighth aspect, a chip is provided, where the chip includes a processor and a communications interface, the communications interface is coupled to the processor, and the processor is configured to execute a program or an instruction, to implement steps of the method according to the first aspect or the second aspect.

According to a ninth aspect, a computer program product is provided, the computer program product is stored in a storage medium, and when the computer program product is executed by at least one processor, the steps of the method according to the first aspect, or the steps of the method according to the second aspect are performed.

In this embodiment of the application, after receiving at least one piece of downlink control information DCI, the terminal can divide, into multiple PDSCH subsets, a PDSCH set scheduled by each DCI, determine a downlink assignment index DAI corresponding to each PDSCH subset, and feed back a hybrid automatic repeat request acknowledgement HARQ-ACK for multiple PDSCH subsets according to the DAI corresponding to each PDSCH subset. Thus, in the case that a single piece of DCI schedules multiple PDSCHs, HARQ-ACK feedback for the scheduled multiple PDSCHs can be implemented.

### BRIEF DESCRIPTION OF DRAWINGS

FIG. 1 is a structural diagram of a wireless communications system provided by an embodiment of the present application;
FIG. 2 is a flowchart of an information feedback method provided by an embodiment of the present application;
FIG. 3A is a schematic diagram 1 of feedback of multiple PDSCH subsets in embodiment 1 of the present application;
FIG. 3B is a schematic diagram 1 of DAI counting in embodiment 1 of the present application;
FIG. 3C is a schematic diagram of a dynamic codebook generated in embodiment 1 of the present application;
FIG. 3D is a schematic diagram 2 of feedback of multiple PDSCH subsets in embodiment 1 of the present application;
FIG. 3E is a schematic diagram of dividing into PDSCH subsets in embodiment 1 of the present application;
FIG. 3F is a schematic diagram 2 of DAI counting in embodiment 1 of the present application;
FIG. 3G is a schematic diagram 3 of DAI counting in embodiment 1 of the present application;
FIG. 3H is a schematic diagram 4 of DAI counting in embodiment 1 of the present application;
FIG. 4A is a schematic diagram 1 of DAI counting in embodiment 2 of the present application;
FIG. 4B is a schematic diagram of a dynamic codebook generated in embodiment 2 of the present application;
FIG. 5A is a schematic diagram of dividing into PDSCH subsets in embodiment 2 of the present application;
FIG. 5B is a schematic diagram 2 of DAI counting in embodiment 2 of the present application;
FIG. 5C is a schematic diagram 3 of DAI counting in embodiment 2 of the present application;
FIG. 6A is a schematic diagram of DAI counting in embodiment 3 of the present application;
FIG. 6B is a schematic diagram of a dynamic codebook generated in embodiment 3 of the present application;
FIG. 7 is a flowchart of an information sending method provided by an embodiment of the present application;
FIG. 8 is a schematic structural diagram of an information feedback apparatus provided by an embodiment of the present application;
FIG. 9 is a schematic structural diagram of an information sending apparatus provided by an embodiment of the present application;
FIG. 10 is a schematic structural diagram of a communications device according to an embodiment of this application; and
FIG. 11 is a schematic structural diagram of a terminal according to an embodiment of this application; and
FIG. 12 is a schematic diagram of a structure a network side device according to an embodiment of this application.

### DESCRIPTION OF EMBODIMENTS

The following clearly describes the technical solutions in embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in the description and the claims of this application are used to distinguish between similar objects, and do not need to be used to describe a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that the technology described in the embodiments of this application is not limited to a long term evolution (Long Time Evolution, LTE)/LTE-advanced (LTE-Advanced, LTE-A) system, and may also be used in various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6-th generation (6th Generation, 6G) communications system.

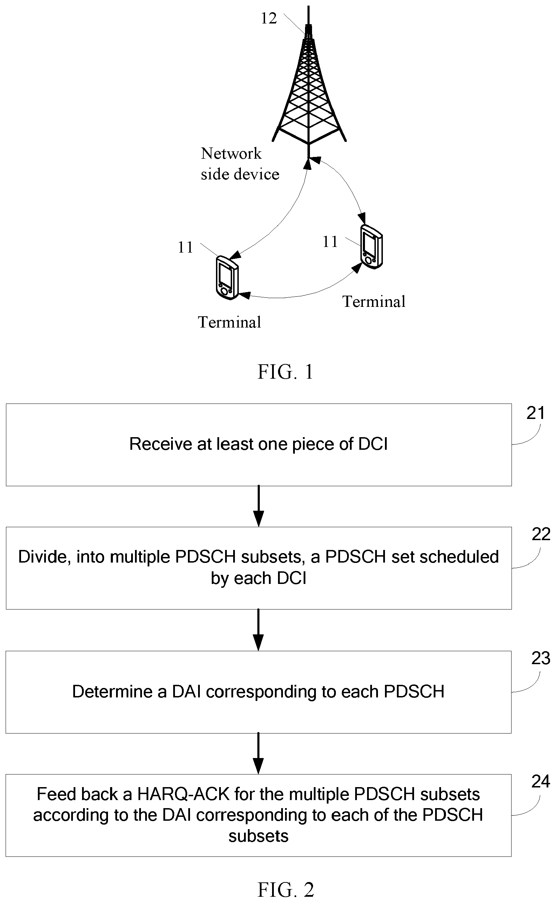

FIG. 1 is a structural diagram of a wireless communications system to which embodiments of this application can be applied. The wireless communications system includes a terminal 11 and a network side device 12. The terminal 11 may also be called a terminal device or user equipment (User Equipment, UE), and the terminal 11 may be a mobile phone, a tablet computer (Tablet Computer), a laptop computer (Laptop Computer) or a notebook computer, a personal digital Assistant (Personal Digital Assistant, PDA), a palmtop computer, a netbook, an ultra-mobile personal computer (Ultra-Mobile Personal Computer, UMPC), a mobile Internet device (Mobile Internet Device, MID), a wearable device (Wearable Device) or a vehicle-mounted device (Vehicle User Equipment, VUE), a pedestrian terminal (Pedestrian User Equipment, PUE), and other terminal side devices. The wearable device includes: bracelets, earphones, glasses, etc. It should be noted that a specific type of the terminal 11 is not limited in this embodiment of this application. The network side device 12 may be a base station or a core network device. The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (eNB), a home Node B, a home evolved Node B, a wireless local area network (Wireless Local Area Network, WLAN) access point, a wireless fidelity (Wireless Fidelity, Wi-Fi) node, a transmission and reception point (Transmitting Receiving Point, TRP), or another specific appropriate term in the art, provided that the same technical effects are achieved, the base station is not limited to specific technical vocabulary. It should be noted that in the embodiments of this application, a base station in the NR system is merely used as an example, but does not limit a specific type of the base station.

With reference to the accompanying drawings, the following describes in detail the information feedback method in the embodiments of this application based on specific embodiments and application scenarios.

Please refer to FIG. 2. FIG. 2 is a flowchart of an information feedback method provided by an embodiment of the present application. The method is performed by a terminal. As shown in FIG. 2, the method includes the following steps:
Step 21: Receive at least one piece of DCI.

In this embodiment, each of the at least one piece of DCI can schedule a PDSCH set, and the PDSCH set includes multiple PDSCHs. That is, each of the at least one piece of DCI can schedule multiple PDSCHs. When receiving at least one piece of DCI, the terminal may receive it from the network side device through a physical downlink control channel (Physical Downlink Control Channel, PDCCH). For example, when the terminal receives multiple piece of DCI through multiple PDCCHs, the multiple PDCCHs may be for different serving cells (serve cells) and/or different PDCCH monitoring occasions (monitoring occasion).

Step 22: Divide, into multiple PDSCH subsets, a PDSCH set scheduled by each DCI.

Optionally, each PDSCH subset may include one PDSCH, or may include multiple PDSCHs. When the terminal divides, into multiple PDSCH subsets, a PDSCH set scheduled by each DCI, it may divide according to protocol pre-definition, network pre-configuration and/or DCI indication, which is not limited in this embodiment.

Step 23: Determine a DAI corresponding to each PDSCH subset.

It should be noted that in this embodiment, the downlink assignment index (Downlink assignment index, DAI) may be cumulative DAI (C-DAI) and/or total DAI (T-DAI). When determining the DAI corresponding to each PDSCH subset, the terminal can use any of the following counting methods: counting C-DAIs and/or T-DAIs based on each DCI, counting C-DAIs and/or T-DAIs based on each PDSCH, and counting C-DAIs and/or T-DAIs based on each PDSCH subset.

Optionally, for the convenience of counting the DAIs, the counting granularity of the DAIs in this embodiment is the PDSCH subset. For example, when a single PDSCH subset only includes a single PDSCH, the corresponding counting granularity of the DAI is PDSCH.

Step 24: Feed back a HARQ-ACK for the multiple PDSCH subsets according to the DAI corresponding to each of the PDSCH subsets.

In this embodiment, after determining the DAI corresponding to each PDSCH subset, the terminal can generate corresponding HARQ-ACK feedback information based on the reception status of a PDSCH in each PDSCH subset, and feed back a HARQ-ACK for multiple PDSCH subsets on a PUCCH. For example, if the reception succeeds, ACK information is fed back, and if the reception fails, NACK information is fed back.

As an optional implementation manner, the terminal may perform HARQ-ACK feedback for multiple PDSCH subsets through a dynamic codebook. The dynamic codebook refers to a codebook generation method in which the size of the HARQ-ACK codebook changes dynamically according to an actual data scheduling situation. By counting DAIs for the actually scheduled PDSCH transmission/semi-persistent scheduling (Semi-Persistent Scheduling, SPS) PDSCH release indication, a feedback bit is reserved for each actually used DAI value. If the terminal infers from other detected DAIs that PDSCH allocation indications or SPS PDSCH release indications corresponding to some DAIs have not been received, a corresponding feedback bit is set to negative acknowledgement (Negative ACKnowledge, NACK). Otherwise, according to a decoding result of the PDSCH transmission corresponding to each PDSCH allocation indication, a corresponding feedback bit is set. For the detected SPS PDSCH release indication, a corresponding feedback bit is set to ACK. Two important parameters in the dynamic codebook are C-DAI and T-DAI. The counting order of C-DAI can be as follows: first, ascending order of serving cell indexes, and then ascending order of PDCCH monitoring occasion start times; T-DAI represents the total quantity of DAIs up to the current PDCCH monitoring occasion.

In the information feedback method in this embodiment of the application, after receiving at least one piece of downlink control information DCI, the terminal can divide, into multiple PDSCH subsets, a PDSCH set scheduled by each DCI, determine a DAI corresponding to each PDSCH subset, and feed back a HARQ-ACK for multiple PDSCH subsets according to the DAI corresponding to each PDSCH subset. Thus, in the case that a single piece of DCI schedules multiple PDSCHs, corresponding HARQ-ACK feedback for the scheduled multiple PDSCHs can be implemented.

Optionally, in this embodiment of the present application, when dividing into the PDSCH subsets, the terminal may divide, into multiple PDSCH subsets according to first information, a PDSCH set scheduled by each DCI. The first information may include any one of the following:
1) The quantity of PDSCHs in each PDSCH subset.

In 1), the quantity of PDSCHs in each PDSCH subset can be determined based on at least one of the following:
information predefined by a protocol; that is, the quantity of PDSCHs in each PDSCH subset can be predefined by the protocol;
configuration information from a network side device; and
an SCS; where the SCS may be an SCS of a PDSCH or a PDCCH.

For example, for the SCS, the quantity of PDSCHs in the corresponding PDSCH subset may be determined according to different SCSs, and there may be a scaling relationship between the quantities of PDSCHs in PDSCH subsets of different SCSs. For example, in a case that SCS is equal to 480K, a PDSCH subset includes 4 PDSCHs by default; in a case that SCS is equal to 960K, a PDSCH subset includes 8 PDSCHs by default, and there is a scaling relationship between them.

In another example, for an SCS, the quantity of PDSCHs in the PDSCH subset under different SCSs can be predefined by the protocol or explicitly indicated by the higher layer, or the quantity of PDSCHs in the PDSCH subset under a certain reference SCS can be configured by the higher layer, and the quantity of PDSCHs in the PDSCH subset under other SCSs are calculated based on a slot ratio relationship between other SCSs and the reference SCS, that is, the scaling relationship.

2) The quantity of bits of HARQ-ACK feedback corresponding to a PDSCH set scheduled by each DCI.

In 2), the quantity of bits of HARQ-ACK feedback corresponding to a PDSCH set scheduled by each DCI can be determined based on at least one of the following:
information predefined by a protocol; that is, the protocol can predefine a fixed quantity of HARQ-ACK bits fed back by a PDSCH set scheduled by each DCI;
configuration information from a network side device; and
an SCS; where the SCS may be an SCS of a PDSCH or a PDCCH.

For example, for the SCS, the quantity of PDSCH subsets into which a corresponding PDSCH set needs to be divided can be determined according to different SCSs, that is, the quantity of corresponding bits of HARQ-ACK feedback can be determined according to different SCSs, and there can be a scaling relationship between the quantities of PDSCHs in PDSCH subsets of different SCSs. For example, in a case that SCS is equal to 480K, all PDSCH sets are divided into 2 PDSCH subsets by default; in a case that SCS is equal to 960K, all PDSCH sets are divided into 4 PDSCH subsets by default, and there is a scaling relationship between them.

In another example, for an SCS, the quantity of HARQ-ACK bits under different SCSs can be predefined by the protocol or explicitly indicated by the higher layer, or the quantity of HARQ-ACK bits under a certain reference SCS can be configured by the higher layer, and the quantity of HARQ-ACK bits under other SCSs are calculated based on a slot ratio relationship between other SCSs and the reference SCS, that is, the scaling relationship. For example, in a case that SCS is equal to 120kHz, 1-bit HARQ-ACK bit information is fixedly fed back for each PDSCH transmission scheduled by DCI, in a case that SCS is equal to 480kHz, 4-bit HARQ-ACK bit information is fixedly fed back, and in a case that SCS is equal to 960kHz, 8-bit HARQ-ACK bit information is fixedly fed back.

In this embodiment of the application, when the terminal performs HARQ-ACK feedback for multiple PDSCH subsets, it can perform HARQ-ACK feedback for multiple PDSCH subsets at a single feedback position, for example, performs HARQ-ACK feedback for multiple PDSCH subsets on a single PUCCH, or performs HARQ-ACK feedback for multiple PDSCH subsets at different feedback positions, for example, performs HARQ-ACK feedback for multiple PDSCH subsets on different PUCCHs. That is, the terminal may perform HARQ-ACK feedback for multiple PDSCH subsets at the same time, or may perform HARQ-ACK feedback for multiple PDSCH subsets at different times.

Optionally, when the terminal performs HARQ-ACK feedback for multiple PDSCH subsets on a single feedback position, for example, on a single PUCCH, the DCI received by the terminal may indicate a single DAI. That is, the DCI may include a first DAI indication field, where the first DAI indication field is used to indicate the DAI corresponding to the first PDSCH subset, and the first PDSCH subset is one of the multiple PDSCH subsets scheduled by the DCI.

Further, the first PDSCH subset may be any one of the following scheduled by the DCI: the 1 st PDSCH subset, the last PDSCH subset, and a PDSCH subset of a preset index. The PDSCH subset of the preset index is also referred to as the PDSCH subset of the specified index.

In this case, DAIs corresponding to other PDSCH subsets in the multiple PDSCH subsets scheduled by the DCI except the first PDSCH subset may be derived based on a predefined rule and the DAI corresponding to the first PDSCH subset. The predefined rule is, for example, to count C-DAIs according to the order of the PDSCH subsets, where the order of the PDSCH subsets is first in ascending order of the serving cell indexes, and then in ascending order of PDCCH monitoring occasion start times.

For example, if feedback is performed, at a single feedback position, that is, at the same time, for multiple PDSCH subsets scheduled by DCI, the value of DAI (such as C-DAI and/or T-DAI) can be determined based on DCI, and the calculation of the DAI uses each PDSCH subset as the granularity. The DCI can only include a single set of DAI information (C-DAI or C-DAI/T-DAI), and the counting granularity of DAI is each PDSCH subset. When a certain piece of DCI schedules multiple PDSCH subsets, DAIs corresponding to these PDSCH subsets are continuously counted, and the modulo operation can be considered. The C-DAI may indicate the DAI corresponding to the 1 st PDSCH subset scheduled by the DCI, or the C-DAI may indicate the DAI corresponding to the last PDSCH subset scheduled by the DCI.

Optionally, in a case that the terminal performs HARQ-ACK feedback for multiple PDSCH subsets on a single feedback position, for example, on a single PUCCH, the DCI received by the terminal may indicate multiple DAIs. That is, the DCI may include a second DAI indication field, and the second DAI indication field is used to indicate DAIs corresponding to at least two PDSCH subsets among the multiple PDSCH subsets scheduled by the DCI.

Further, in order to facilitate the terminal to determine the DAI corresponding to each PDSCH subset, the second DAI indication field may be used to indicate the DAI corresponding to each PDSCH subset among the multiple PDSCH subsets scheduled by the DCI.

Optionally, in a case that the terminal performs HARQ-ACK feedback for multiple PDSCH subsets at different feedback positions such as different PUCCHs, the DCI received by the terminal may indicate multiple DAIs, for example, the DCI indicates a corresponding DAI for each PDSCH subset, or the DCI indicates a corresponding DAI for each feedback position. That is, the DCI may include a third DAI indication field; the third DAI indication field is used to indicate a DAI corresponding to each PDSCH subset among the multiple PDSCH subsets scheduled by the DCI, or the third DAI indication field is used to indicate a DAI corresponding to each of the different feedback positions.

Further, in a case that the DCI indicates the corresponding DAI for each feedback position, a DAI corresponding to each feedback position may be: a DAI corresponding to the second PDSCH subset of each feedback position, and the second PDSCH subset is any one of the following: the 1st PDSCH subset, the last PDSCH subset, and a PDSCH subset of a preset index. The PDSCH subset of the preset index is also referred to as the PDSCH subset of the specified index.

In this case, DAIs corresponding to other PDSCH subsets in the multiple PDSCH subsets scheduled by the DCI except the second PDSCH subset may be derived based on a predefined rule and the DAI corresponding to the second PDSCH subset. The predefined rule is, for example, to count C-DAIs according to the order of the PDSCH subsets, where the order of the PDSCH subsets is first in ascending order of the serving cell indexes, and then in ascending order of PDCCH monitoring occasion start times.

It should be pointed out that in a case that HARQ-ACK feedback is performed for multiple PDSCH subsets at different feedback positions, it is necessary to additionally indicate or determine the mapping relationship between the PDSCH subsets and the PUCCH positions. Optionally, the mapping relationship between PDSCH subsets and PUCCH positions may be a one-to-one relationship or a many-to-one relationship.

For example, if feedback is performed, at different feedback positions, that is, at different times, for multiple PDSCH subsets scheduled by the DCI, the value of the DAI may be determined based on each PDSCH subset according to the feedback position. The DCI can assign a C-DAI value and a T-DAI value to each PDSCH subset through the DAI indication field. Alternatively, the DCI may indicate a DAI for each feedback position, such as the DAI corresponding to the starting PDSCH subset, and this feedback position is derived based on a predefined rule according to a DAI corresponding to another PDSCH subset scheduled by the DCI (preferably the 1st PDSCH subset or the last PDSCH subset set). These PDSCH subsets are continuous, and the quantity of continuous PDSCH subsets can be predefined by the protocol, configured by the base station, or configured according to SCS scaling. For example, feedback is performed for three consecutive PDSCH subsets at the same time, and the C-DAI value of the 1st PDSCH subset is 2. In this case, C-DAI values of the next two PDSCH subsets are 3 and 4 by default.

Optionally, in this embodiment of the present application, in a case that the terminal performs HARQ-ACK feedback, each PDSCH in each PDSCH subset may correspond to independent HARQ-ACK bit information, so that the network side device can clearly know the reception status of each PDSCH. Alternatively, each PDSCH subset may correspond to unified HARQ-ACK bit information, and in this case, the PDSCHs in each PDSCH subset perform time domain bundling (Time domain bundling), so as to save feedback resources.

It should be pointed out that if some cells can only support that one piece of DCI schedules one PDSCH, and some cells support that one piece of DCI schedules multiple PDSCHs, there are two manners to generate the codebook: 1) two sub-codebooks are used, that is, one sub-codebook is used to generate an instance of one piece of DCI scheduling one PDSCH, and the other sub-codebook is used to generate an instance of one piece of DCI scheduling multiple PDSCHs, which is mainly for the solution of acknowledging feedback bits; 2) the quantity of PDSCH subsets scheduled by each DCI is variable, for example, fixed to 1 or can be greater than 1. When a serving cell only supports that one piece of DCI schedules a single PDSCH, it is only supported that a single DCI schedules a single PDSCH subset by default, and the PDSCH subset can only contain a single PDSCH. In this way, the codebook can be expanded uniformly.

The solutions in this application will be described in detail below in conjunction with specific embodiments.

### Embodiment 1

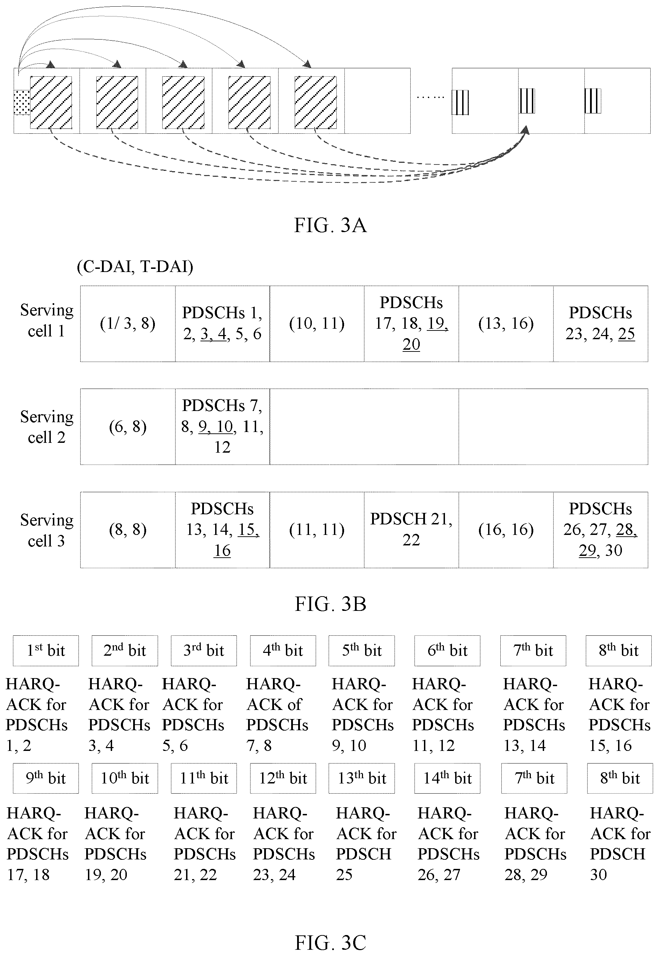

In this embodiment 1, after the UE divides, into multiple PDSCH subsets, a PDSCH set scheduled by each DCI, the determination rule for the NDI value may be as follows: one NDI value is generated for each PDSCH subset. The specific calculation rule of DAI can be as follows:
Case 1: As shown in FIG. 3A, if feedback is performed for multiple PDSCH subsets at the same time, the value of the DAI (C-DAI and T-DAI) can be determined based on DCI, and the calculation of the DAI is based on each PDSCH subset. The value of the 1st DAI may start from 1, or start from a group quantity of multiple PDSCHs scheduled by the 1st PDCCH.

It is assumed that the quantity of scheduled PDSCHs in each PDSCH subset is Q, and if the quantity of PDSCHs in the last PDSCH subset is less than Q, it is also a separate subset.

As shown in FIG. 3B, it is assumed that the quantity of scheduled PDSCHs in each PDSCH subset of three serving cells, that is, serving cell 1, serving cell 2, and serving cell 3, is 2, that is, Q is equal to 2. Assuming that in the serving cell 1, one PDCCH schedules PDSCHs 1, 2, 3, 4, 5, and 6, then PDSCH 1 and PDSCH 2 form a group, that is, form a PDSCH subset, PDSCH 3 and PDSCH 4 form a group, and PDSCH 5 and PDSCH 6 form a group; one PDCCH schedules PDSCHs 17, 18, 19, 20, then PDSCH 17 and PDSCH 18 form a group, and PDSCH 19 and PDSCH 20 form a group; one PDCCH schedules PDSCHs 23, 24, 25, then PDSCH 23 and PDSCH24 is a group, and PDSCH 25 is a group. Assuming that in the serving cell 2, one PDCCH schedules PDSCHs 7, 8, 9, 10, 11, and 12, then PDSCH 7 and PDSCH 8 form a group, PDSCH 9 and PDSCH 10 form a group, and PDSCH 11 and PDSCH 12 form a group. Assuming that in the serving cell 3, one PDCCH schedules PDSCHs 13, 14, 15, and 16, then PDSCH 13 and PDSCH 14 form a group, and PDSCH 15 and PDSCH 16 form a group; one PDCCH schedules PDSCHs 21 and 22, then PDSCH 21 and PDSCH 22 form a group; one PDCCH schedules PDSCH 26, 27, 28, 29, 30, then PDSCH 26 and PDSCH 27 form a group, PDSCH 28 and PDSCH 29 forms a group, and PDSCH 30 is a group.

For the 1st PDCCH monitoring occasion (monitoring occasion), the PDCCH in the serving cell 1 schedules 3 groups of PDSCHs, and therefore the C-DAI of the serving cell 1 is 1 (starting from 1, a total of three counts) or 3; the PDCCH in the serving cell 2 schedules three groups of PDSCHs, and therefore the C-DAI of the serving cell 2 is the total quantity of C-DAIs of the serving cell 1 plus 3, that is, the C-DAI of the serving cell 2 is 6; the PDCCH in the serving cell 3 schedules 2 groups of PDSCHs, and therefore the C-DAI of the serving cell 3 is the C-DAI of the serving cell 2 plus 2, that is, the C-DAI of the serving cell 3 is 8. When counting T-DAIs, the quantity of all PDSCH groups scheduled in the current PDCCH monitoring occasion is considered, and for the 1st PDCCH monitoring occasion, its value is 8.

For the 2nd PDCCH monitoring occasion, the PDCCH in serving cell 1 schedules 2 groups of PDSCHs, and therefore the C-DAI of serving cell 1 is the previous quantity plus 2, that is, the C-DAI of serving cell 1 is 10; serving cell 2 has no PDCCH monitoring occasion; the PDCCH in the serving cell 3 schedules a group of PDSCHs, and therefore the C-DAI of the serving cell 3 is the previous C-DAI plus 1, that is, the C-DAI of the serving cell 3 is 11. For the T-DAI of the 2nd PDCCH monitoring occasion, its value is 11.

For the 3rd PDCCH monitoring occasion, the PDCCH in serving cell 1 schedules 2 groups of PDSCHs, and therefore the C-DAI of serving cell 1 is the previous quantity plus 2, that is, the C-DAI of serving cell 1 is 13; serving cell 2 has no PDCCH monitoring occasion; the PDCCH in the serving cell 3 schedules three groups of PDSCHs, and therefore the C-DAI of the serving cell 3 is the previous C-DAI plus 3, that is, the C-DAI of the serving cell 3 is 16. For the T-DAI of the 3rd PDCCH monitoring occasion, its value is 16.

Further, in this case, based on the C-DAI and T-DAI shown in FIG. 3B, the dynamic codebook generated by the UE can be as shown in FIG. 3C, where each PDSCH subset corresponds to one bit of HARQ-ACK information.

Understandably, for the DAI counting in this case, only a single DAI needs to be indicated in the DCI, which can effectively save the overheads of the DAI indication field and the DAI.

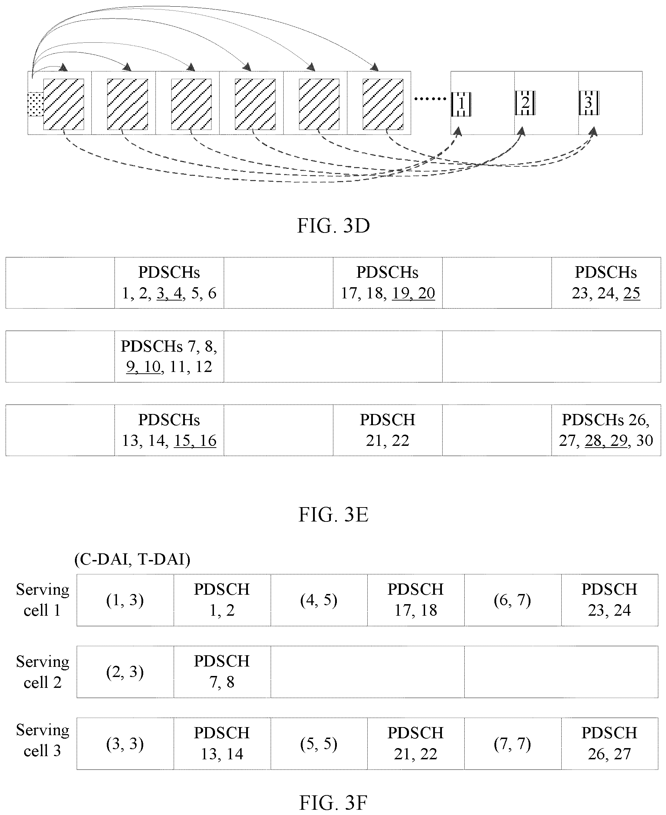

Case 2: As shown in FIG. 3D, if feedback is performed for multiple PDSCH subsets at different times, the DAI value may be determined based on each PDSCH subset according to the feedback position. In the DCI, a C-DAI value and a T-DAI value need to be assigned to each PDSCH subset.

It is assumed that the quantity of scheduled PDSCHs in each PDSCH subset is Q, and if the quantity of PDSCHs in the last PDSCH subset is less than Q, it is also a separate subset.

As shown in FIG. 3E, it is assumed that the quantity of scheduled PDSCHs in each PDSCH subset of three serving cells, that is, serving cell 1, serving cell 2, and serving cell 3, is 2, that is, Q is equal to 2. For multiple PDSCH subsets scheduled by DCI in each PDCCH, feedback is performed for the 1st PDSCH subset on PUCCH 1, feedback is performed for the 2nd PDSCH subset on PUCCH 2, and feedback is performed for the 3rd PDSCH subset on PUCCH 3. In the PDSCH subset shown in FIG. 3E, the same mark represents the same feedback position, and different marks have different feedback positions. For example, a bold PDSCH represents feedback on PUCCH 1, a bold and underlined PDSCH represents feedback on PUCCH 2, and a normal marked PDSCH represents feedback on PUCCH 3. It should be pointed out that for the division of the PDSCH subsets in the second case, reference may be made to the description in the first case, which will not be repeated here.

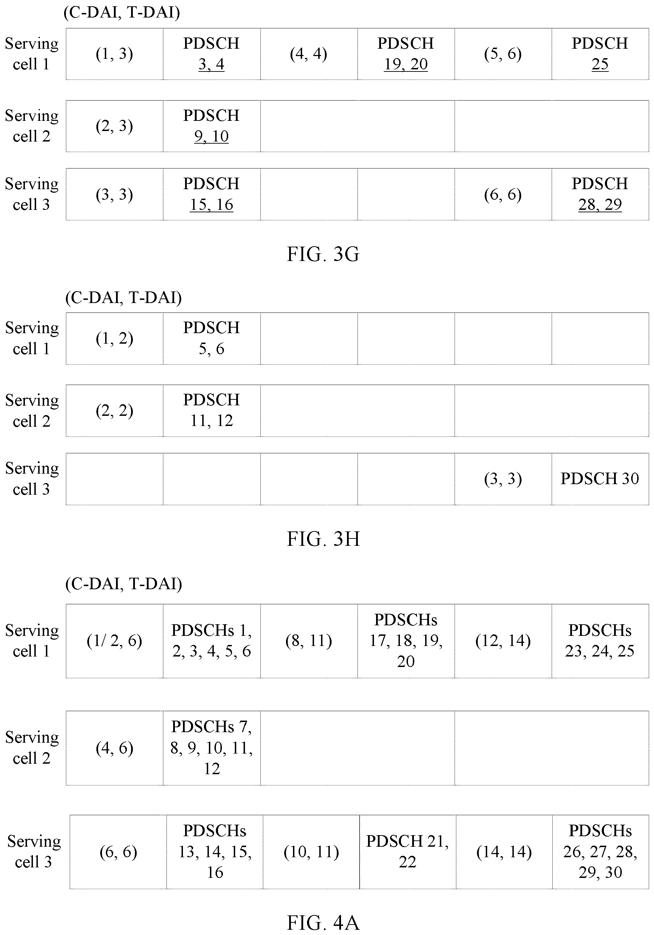

In this case, the value of DAI may be determined based on each PDSCH subset. In the DCI, a C-DAI value and a T-DAI value need to be assigned to each PDSCH subset. In addition, all PDSCH subsets for which feedback is performed on PUCCH 1 use a set of DAI calculation rules, that is, C-DAI is first based on ascending order of serving cell indexes and then ascending order of PDCCH monitoring occasion start times. The corresponding C-DAI and T-DAI can be shown in FIG. 3F. All PDSCH subsets for which feedback is performed on PUCCH 2 use a set of DAI calculation rules, that is, C-DAI is first based on ascending order of serving cell indexes and then ascending order of PDCCH monitoring occasion start times. The corresponding C-DAI and T-DAI can be shown in FIG. 3G. All PDSCH subsets for which feedback is performed on PUCCH 3 use a set of DAI calculation rules, that is, C-DAI is first based on ascending order of serving cell indexes and then ascending order of PDCCH monitoring occasion start times. The corresponding C-DAI and T-DAI can be shown in FIG. 3H.

It is understandable that for the DAI counting in the second case, if the detection is missed, no ambiguity will be caused to the codebook.

### Embodiment 2

In embodiment 2, after the UE determines the quantity of PDSCHs in each PDSCH subset according to the quantity of feedback bits that need to be generated, according to the determined quantity of PDSCHs in each PDSCH subset, the PDSCH set scheduled by each received DCI is divided into multiple PDSCH subsets, and an NDI value is generated for each PDSCH subset. The specific calculation rule of DAI can be as follows:
Case 1: If feedback is performed for multiple PDSCH subsets at the same time, the value of the DAI (C-DAI and T-DAI) can be determined based on DCI, and the calculation of DAI is based on the quantity of feedback bits/each PDSCH subset to be generated. For a schematic diagram of performing feedback for multiple PDSCH subsets at the same time, refer to FIG. 3A.

Assuming that regardless of the total quantity of PDSCHs scheduled by each DCI, 2-bit HARQ-ACK information is always fed back, the scheduled PDSCH set, that is, the scheduled multiple PDSCHs, is divided into two PDSCH subsets, as shown in FIG. 4A.

For the 1st PDCCH monitoring occasion, the C-DAI of the serving cell 1 is 1 (starting from 1, a total of three counts) or 2; a PDSCH scheduled by each PDCCH is divided into two groups, and therefore the C-DAI of the serving cell 2 is the total quantity of C-DAIs of the serving cell 1 plus 2, that is, the C-DAI of the serving cell 2 is 4; the C-DAI of the serving cell 3 is the C-DAI of the serving cell 2 plus 2, that is, the C-DAI of the serving cell 3 is 6. When counting T-DAIs, the quantity of all PDSCH groups scheduled in the current PDCCH monitoring occasion is considered, and for the 1st PDCCH monitoring occasion, its value is 6.

For the 2nd PDCCH monitoring occasion, the C-DAI of serving cell 1 is the previous quantity plus 2, that is, the C-DAI of serving cell 1 is 8; serving cell 2 has no PDCCH monitoring occasion; the C-DAI of the serving cell 3 is the previous C-DAI plus 2, that is, the C-DAI of the serving cell 3 is 10. For the T-DAI of the 2nd PDCCH monitoring occasion, its value is 10.

For the 3rd PDCCH monitoring occasion, the C-DAI of serving cell 1 is the previous quantity plus 2, that is, the C-DAI of serving cell 1 is 12; serving cell 2 has no PDCCH monitoring occasion; the C-DAI of the serving cell 3 is the previous C-DAI plus 2, that is, the C-DAI of the serving cell 3 is 14. For the T-DAI of the 3rd PDCCH monitoring occasion, its value is 14.

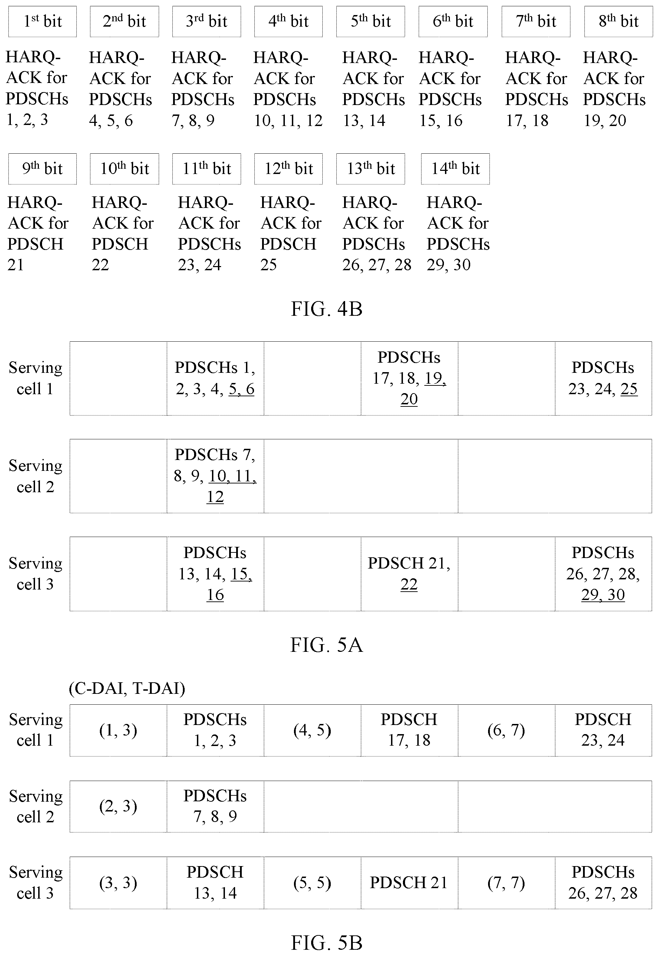

Further, in this case, based on the C-DAI and T-DAI shown in FIG. 4A, the dynamic codebook generated by the UE can be as shown in FIG. 4B, where each PDSCH subset corresponds to one bit of HARQ-ACK information.

Understandably, for the DAI counting in this case, only a single DAI needs to be indicated in the DCI, which can effectively save the overheads of the DAI indication field and the DAI, and if the detection is missed, no ambiguity will be caused to the codebook.

Case 2: If feedback is performed for multiple PDSCH subsets at different times, the DAI value may be determined based on each PDSCH subset according to the feedback position. The calculation of DAI is based on the quantity of feedback bits/each PDSCH subset to be generated. For a schematic diagram of performing feedback for multiple PDSCH subsets at different times, refer to FIG. 3D.

Assuming that regardless of the total quantity of PDSCHs scheduled by each DCI, 2-bit HARQ-ACK information is always fed back, the scheduled PDSCH set, that is, the scheduled multiple PDSCHs, is divided into two PDSCH subsets, as shown in FIG. 5A.

As shown in FIG. 5A, for two PDSCH subsets scheduled by DCI in each PDCCH, feedback is performed for the 1st PDSCH subset on PUCCH 1, and feedback is performed for the 2nd PDSCH subset on PUCCH 2. Moreover, the same mark represents the same feedback position, and different marks have different feedback positions. For example, a bold PDSCH represents feedback on PUCCH 1, and a bold and underlined PDSCH represents feedback on PUCCH 2.

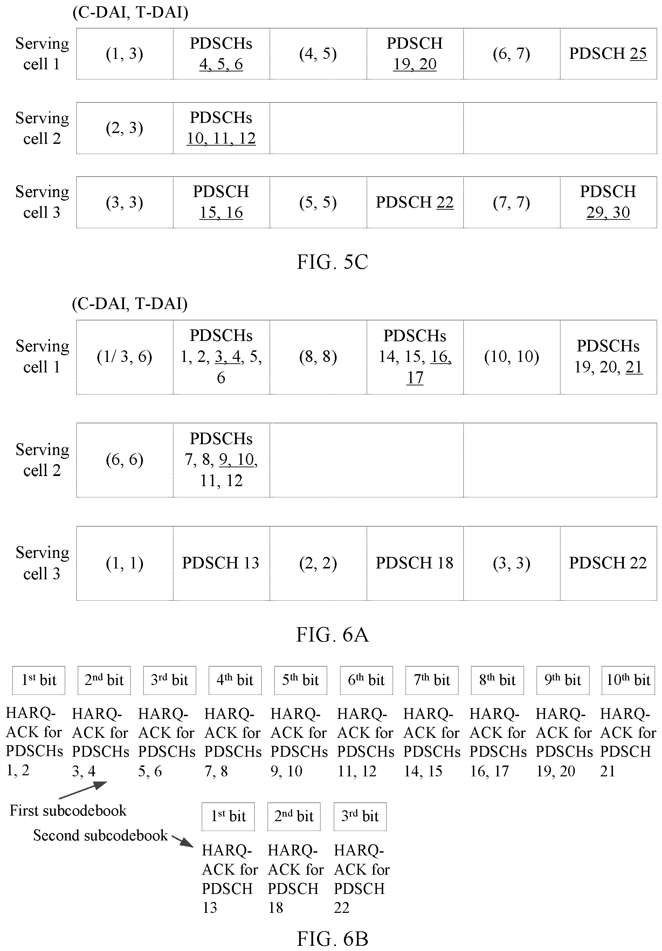

In this case, the value of DAI may be determined based on each PDSCH subset. In the DCI, a C-DAI value and a T-DAI value need to be assigned to each PDSCH subset. In addition, all PDSCH subsets for which feedback is performed on PUCCH 1 use a set of DAI calculation rules, that is, C-DAI is first based on ascending order of serving cell indexes and then ascending order of PDCCH monitoring occasion start times. The corresponding C-DAI and T-DAI can be shown in FIG. 5B. All PDSCH subsets for which feedback is performed on PUCCH 2 use a set of DAI calculation rules, that is, C-DAI is first based on ascending order of serving cell indexes and then ascending order of PDCCH monitoring occasion start times. The corresponding C-DAI and T-DAI can be shown in FIG. 5C.

It is understandable that for the DAI counting in the second case, if the detection is missed, no ambiguity will be caused to the codebook.

### Embodiment 3

In embodiment 3, if some cells can only support that one piece of DCI schedules one PDSCH, and some cells support that one piece of DCI schedules multiple PDSCHs, the codebook may be generated by using two sub-codebooks, that is, one sub-codebook is used to generate an instance of one piece of DCI scheduling one PDSCH, and the other sub-codebook is used to generate an instance of one piece of DCI scheduling multiple PDSCHs.

As shown in FIG. 6A, it is assumed that among the three serving cells, both serving cell 1 and serving cell 2 support that one piece of DCI schedules multiple PDSCHs, and serving cell 3 only supports that one piece of DCI schedules one PDSCH, and the quantity of scheduled PDSCHs in each PDSCH subset is 2. In this case, the PDSCH sets scheduled by the PDCCHs of serving cell 1 and serving cell 2 can be divided into PDSCH subsets, and a set of DAI calculation rules are used to count DAIs, specifically:
For the 1st PDCCH monitoring occasion, the PDCCH in the serving cell 1 schedules 3 groups of PDSCHs, and therefore the C-DAI of the serving cell 1 is 1 (starting from 1, a total of three counts) or 3; the PDCCH in the serving cell 2 schedules three groups of PDSCHs, and therefore the C-DAI of the serving cell 2 is the total quantity of C-DAIs of the serving cell 1 plus 3, that is, the C-DAI of the serving cell 2 is 6. When counting T-DAIs, the quantity of all PDSCH groups scheduled in the current PDCCH monitoring occasion is considered, and for the 1st PDCCH monitoring occasion, its value is 6.

For the 2nd PDCCH monitoring occasion, the PDCCH in serving cell 1 schedules 2 groups of PDSCHs, and therefore the C-DAI of serving cell 1 is the previous quantity plus 2, that is, the C-DAI of serving cell 1 is 8; serving cell 2 has no PDCCH monitoring occasion. For the T-DAI of the 2nd PDCCH monitoring occasion, its value is 8.

For the 3rd PDCCH monitoring occasion, the PDCCH in serving cell 1 schedules 2 groups of PDSCHs, and therefore the C-DAI of serving cell 1 is the previous quantity plus 2, that is, the C-DAI of serving cell 1 is 10. For the T-DAI of the second PDCCH monitoring occasion, its value is 10.

At the same time, in this embodiment, DAI counting is also performed for the three PDSCHs scheduled by the PDCCHs in the serving cell 3, as shown in FIG. 6A.

Further, based on the C-DAI and T-DAI shown in FIG. 6A, the LTE can generate two sub-codebooks, as shown in FIG. 6B, where the first sub-codebook includes data of multiple PDSCHs scheduled by one piece of DCI in serving cell 1 and serving cell 2, the second subcodebook includes data of one PDSCH scheduled by one piece of DCI in the serving cell 3.

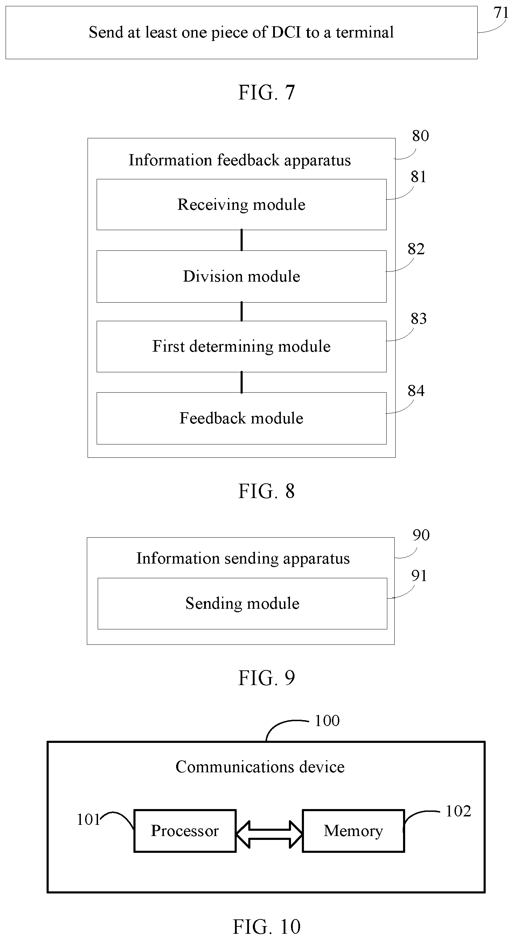

Please refer to FIG. 7. FIG. 7 is a flowchart of an information sending method provided in an embodiment of the present application. The method is performed by a network side device. As shown in FIG. 7, the method includes the following steps:
Step 71: Send at least one piece of DCI to a terminal.

In this embodiment, the at least one piece of DCI is used by the terminal to divide, into multiple PDSCH subsets, a PDSCH set scheduled by each DCI, determine a DAI corresponding to each of the PDSCH subsets, and feed back a HARQ-ACK for the multiple PDSCH subsets according to the DAI corresponding to each of the PDSCH subsets.

Each of the at least one piece of DCI can schedule a PDSCH set, and the PDSCH set includes multiple PDSCHs. That is, each of the at least one piece of DCI can schedule multiple PDSCHs. The network side device may send at least one piece of DCI to the terminal through the PDCCH.

In the information send method in this embodiment of the application, at least one piece of DCI may be sent to the terminal, so that the terminal can divide, into multiple PDSCH subsets, a PDSCH set scheduled by each DCI, determine a DAI corresponding to each PDSCH subset, and feed back a HARQ-ACK for multiple PDSCH subsets according to the DAI corresponding to each PDSCH subset. Thus, in the case that a single piece of DCI schedules multiple PDSCHs, corresponding HARQ-ACK feedback for the scheduled multiple PDSCHs can be implemented.

Optionally, the DCI in this embodiment of the application may satisfy any one of the following:
in a case that HARQ-ACK feedback is performed for the multiple PDSCH subsets at a single feedback position, the DCI includes a first DAI indication field, the first DAI indication field is used to indicate a DAI corresponding to the first PDSCH subset, and the first PDSCH subset is one of the multiple PDSCH subsets;
in a case that HARQ-ACK feedback is performed for the multiple PDSCH subsets at a single feedback position, the DCI includes a second DAI indication field, and the second DAI indication field is used to indicate DAIs corresponding to at least two PDSCH subsets among the multiple PDSCH subsets; and
in a case that HARQ-ACK feedback is performed for the multiple PDSCH subsets at different feedback positions, the DCI includes a third DAI indication field; the third DAI indication field is used to indicate a DAI corresponding to each PDSCH subset among the multiple PDSCH subsets, or the third DAI indication field is used to indicate a DAI corresponding to each of the different feedback positions.

Optionally, the information sending method in the embodiment of the present application may further include: determining a new data indicator (New Data Indicator, NDI) corresponding to each PDSCH subset, where the NDI is sent to the terminal through the at least one piece of DCI, so that the terminal knows whether the data transmitted by the PDSCH in each PDSCH subset is newly transmitted or retransmitted.

It should be noted that, the information feedback method provided in the embodiment of the present application may be performed by an information feedback apparatus, or a control module in the information feedback apparatus for executing the information feedback method. In the embodiment of the present application, the information feedback apparatus provided in the embodiment of the present application is described by taking the information feedback apparatus executing the information feedback method as an example.

Please refer to FIG. 8. FIG. 8 is a schematic structural diagram of an information feedback apparatus provided by an embodiment of the present application. The apparatus is applied to a terminal. As shown in FIG. 8, the information feedback apparatus 80 includes:
a receiving module 81, configured to receive at least one piece of DCI;
a division module 82, configured to divide, into multiple PDSCH subsets, a PDSCH set scheduled by each DCI;
a first determining module 83, configured to determine a DAI corresponding to each of the PDSCH subsets; and
a feedback module 84, configured to feed back a HARQ-ACK for the multiple PDSCH subsets according to the DAI corresponding to each of the PDSCH subsets.

Optionally, the counting granularity of the DAI is a PDSCH subset.

Optionally, the feedback module 84 is specifically configured to perform any one of the following:
performing HARQ-ACK feedback for the multiple PDSCH subsets at a single feedback position; and
performing HARQ-ACK feedback for the multiple PDSCH subsets at different feedback positions.

Optionally, in a case that HARQ-ACK feedback is performed for the multiple PDSCH subsets at a single feedback position, the DCI includes a first DAI indication field, the first DAI indication field is used to indicate a DAI corresponding to the first PDSCH subset, and the first PDSCH subset is one of the multiple PDSCH subsets.

Optionally, the first PDSCH subset is any one of the following scheduled by the DCI: the 1st PDSCH subset, the last PDSCH subset, and a PDSCH subset of a preset index.

Further, DAIs corresponding to other PDSCH subsets in the multiple PDSCH subsets except the first PDSCH subset are derived based on a predefined rule and the DAI corresponding to the first PDSCH subset.

Optionally, in a case that HARQ-ACK feedback is performed for the multiple PDSCH subsets at a single feedback position, the DCI includes a second DAI indication field, and the second DAI indication field is used to indicate DAIs corresponding to at least two PDSCH subsets among the multiple PDSCH subsets.

Optionally, the second DAI indication field is used to indicate the DAI corresponding to each PDSCH subset among the multiple PDSCH subsets.

Optionally, in a case that HARQ-ACK feedback is performed for the multiple PDSCH subsets at different feedback positions, the DCI includes a third DAI indication field; the third DAI indication field is used to indicate a DAI corresponding to each PDSCH subset among the multiple PDSCH subsets, or the third DAI indication field is used to indicate a DAI corresponding to each of the different feedback positions.

Optionally, a DAI corresponding to each feedback position is: a DAI corresponding to the second PDSCH subset of each feedback position, and the second PDSCH subset is any one of the following: the 1st PDSCH subset, the last PDSCH subset, and a PDSCH subset of a preset index.

Further, DAIs corresponding to other PDSCH subsets in the multiple PDSCH subsets except the second PDSCH subset are derived based on a predefined rule and the DAI corresponding to the second PDSCH subset.

Optionally, the PDSCH subset and the feedback position have a one-to-one relationship, or the PDSCH subset and the feedback position have a many-to-one relationship.

Optionally, each PDSCH in each of the PDSCH subsets corresponds to independent HARQ-ACK bit information, or each of the PDSCH subsets corresponds to unified HARQ-ACK bit information.

Optionally, the division module 82 is specifically configured to: divide, into multiple PDSCH subsets according to the first information, a PDSCH set scheduled by each DCI.

The first information includes any one of the following:
the quantity of PDSCHs in each PDSCH subset; and
the quantity of bits of HARQ-ACK feedback corresponding to a PDSCH set scheduled by each DCI.

Optionally, the quantity of PDSCHs in each PDSCH subset is determined based on at least one of the following:
information predefined by a protocol;
configuration information from a network side device; and
an SCS; where the SCS may be an SCS of a PDSCH or a PDCCH;
or the quantity of bits of HARQ-ACK feedback corresponding to a PDSCH set scheduled by each DCI is determined based on at least one of the following:
   information predefined by a protocol;
   configuration information from a network side device; and
   an SCS; where the SCS may be an SCS of a PDSCH or a PDCCH;

The information feedback apparatus in the embodiments of the present application may be an apparatus, or may be a component, an integrated circuit, or a chip in a terminal. The apparatus may be a mobile terminal, or a non-mobile terminal. Exemplarily, mobile terminals may include, but are not limited to, the types of terminals 11 listed above, and non-mobile terminals may be servers, network attached storage (Network Attached Storage, NAS), personal computers (personal computers, PCs), televisions (television, TV), teller machines or self-service machines, etc., which are not specifically limited in this embodiment of the present application.

The information feedback apparatus in the embodiments of the present application may be an apparatus with an operating system. The operating system may be an Android (Android) operating system, may be an iOS operating system, or may be another possible operating system. This is not specifically limited in this embodiment of this application.

The information feedback apparatus according to an embodiments of the present disclosure can implement the processes in the method embodiments in FIG. 2 to FIG. 6B, and achieve the same technical effect. To avoid repetition, details are not described herein again.

It should be noted that, the information sending method provided in the embodiment of the present application may be performed by an information sending apparatus, or a control module in the information sending apparatus for executing the information sending method. In the embodiment of the present application, the information sending apparatus provided in the embodiment of the present application is described by taking the information sending apparatus executing the information sending method as an example.

Please refer to FIG. 9. FIG. 9 is a schematic structural diagram of an information sending apparatus provided in an embodiment of the present application. The apparatus is applied to a network side device. As shown in FIG. 9, the information sending apparatus 90 includes:
a sending module 91, configured to send at least one piece of DCI to a terminal;
where the at least one piece of DCI is used by the terminal to divide, into multiple PDSCH subsets, a PDSCH set scheduled by each DCI, determine a DAI corresponding to each of the PDSCH subsets, and feed back a HARQ-ACK for the multiple PDSCH subsets according to the DAI corresponding to each of the PDSCH subsets.

Optionally, the DCI satisfies any one of the following:
in a case that HARQ-ACK feedback is performed for the multiple PDSCH subsets at a single feedback position, the DCI includes a first DAI indication field, the first DAI indication field is used to indicate a DAI corresponding to the first PDSCH subset, and the first PDSCH subset is one of the multiple PDSCH subsets;
in a case that HARQ-ACK feedback is performed for the multiple PDSCH subsets at a single feedback position, the DCI includes a second DAI indication field, and the second DAI indication field is used to indicate DAIs corresponding to at least two PDSCH subsets among the multiple PDSCH subsets; and
in a case that HARQ-ACK feedback is performed for the multiple PDSCH subsets at different feedback positions, the DCI includes a third DAI indication field; the third DAI indication field is used to indicate a DAI corresponding to each PDSCH subset among the multiple PDSCH subsets, or the third DAI indication field is used to indicate a DAI corresponding to each of the different feedback positions.

Optionally, the information sending apparatus 90 includes:
a second determining module, configured to determine a NDI corresponding to each of the PDSCH subsets; where the NDI is sent to the terminal through the at least one piece of DCI.

The information sending apparatus according to embodiments of the present disclosure can implement the processes in the method embodiments in FIG. 7, and achieve the same technical effect. To avoid repetition, details are not described herein again.

Optionally, as shown in FIG. 10, an embodiment of the present application further provides a communications device 100, including a processor 101, a memory 102, and a program or an instruction stored in the memory 102 and executable on the processor 101. For example, when the communications device 100 is a terminal, when the program or instruction is executed by the processor 101, each process of the embodiment of the foregoing information feedback method is performed, and the same technical effect can be achieved. In a case that the communications device 100 is a network side device, when the program or the instruction is executed by the processor 101, each process in the embodiment of the information sending method is implemented, and a same technical effect can be achieved. To avoid repetition, details are not described herein again.

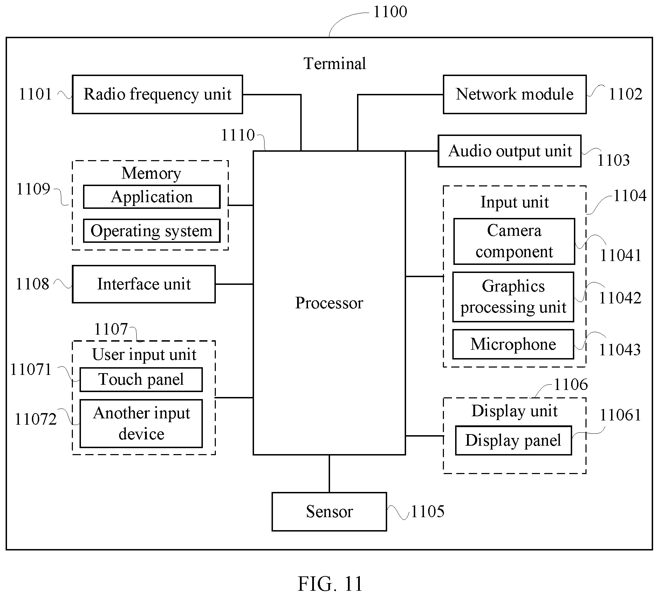

FIG. 11 is a schematic diagram of a hardware structure of a terminal according to an embodiment of this application.

A terminal 1100 includes but is not limited to components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art can understand that the terminal 1100 may further include a power supply (such as a battery) that supplies power to each component. The power supply may be logically connected to the processor 1110 by using a power supply management system, to implement functions such as charging and discharging management, and power consumption management by using the power supply management system. The terminal structure shown in FIG. 11 constitutes no limitation on the terminal, and the terminal may include more or fewer components than those shown in the figure, or combine some components, or have different component arrangements. Details are not described herein.

It should be understood that, in this embodiment of this application, the input unit 1104 may include a graphics processing unit (Graphics Processing Unit, GPU) 11041 and a microphone 11042, and the graphics processing unit 11041 processes image data of a still picture or a video obtained by an image capture apparatus (for example, a camera) in a video capture mode or an image capture mode. The display unit 1106 may include a display panel 11061. Optionally, the display panel 11061 may be configured in a form such as a liquid crystal display or an organic light-emitting diode. The user input unit 1107 includes a touch panel 11071 and another input device 11072. The touch panel 11071 is also referred to as a touchscreen. The touch panel 11071 may include two parts: a touch detection apparatus and a touch controller. The another input device 11072 may include but is not limited to a physical keyboard, a functional button (such as a volume control button or a power on/off button), a trackball, a mouse, and a joystick. Details are not described herein.

In this embodiment of this application, the radio frequency unit 1101 receives downlink data from a network side device and then sends the downlink data to the processor 1110 for processing; and sends uplink data to the network side device. Usually, the radio frequency unit 1101 includes but is not limited to an antenna, at least one amplifier, a transceiver, a coupler, a low noise amplifier, a duplexer, and the like.

The memory 1109 may be configured to store a software program or an instruction and various data. The memory 1109 may mainly include a program or instruction storage area and a data storage area, where the program or instruction storage area may store an operating system, an application program or instructions required by at least one function (such as a sound playback function, an image playback function, etc.) and the like. In addition, the memory 1109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1110 may include one or more processing units. Optionally, an application processor and a modem processor may be integrated into the processor 1110. The application processor mainly processes an operating system, a user interface, an application, an instruction, or the like. The modem processor mainly processes wireless communications, for example, a baseband processor. It can be understood that, alternatively, the modem processor may not be integrated into the processor 1110.

The radio frequency unit 1101 is configured to receive at least one piece of DCI.

The processor 1110 is configured to receive at least one piece of DCI, divide, into multiple PDSCH subsets, a PDSCH set scheduled by each DCI, determine a downlink assignment index DAI corresponding to each of the PDSCH subsets, and feed back a HARQ-ACK for the multiple PDSCH subsets according to the DAI corresponding to each of the PDSCH subsets.

It can be understood that the terminal 1100 provided in the embodiment of the present application can implement various processes implemented in the method embodiment in FIG. 2 and achieve the same technical effect. To avoid repetition, details are not repeated here.

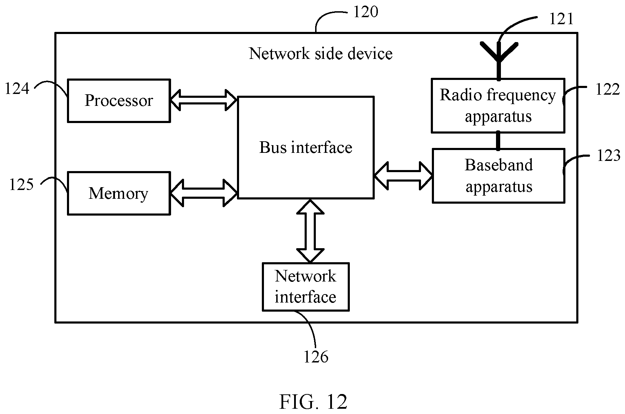

Specifically, an embodiment of this application further provides a network side device. As shown in FIG. 12, the network device 120 includes: an antenna 121, a radio frequency apparatus 122, and a baseband apparatus 123. The antenna 121 is connected to the radio frequency apparatus 122. In an uplink direction, the radio frequency apparatus 122 receives information through the antenna 121, and sends the received information to the baseband apparatus 123 for processing. In a downlink direction, the baseband apparatus 123 processes information that needs to be sent, and sends processed information to the radio frequency apparatus 122. The radio frequency apparatus 122 processes the received information, and sends processed information by using the antenna 121.

The foregoing band processing apparatus may be located in the baseband apparatus 123, and the method performed by the network side device in the foregoing embodiment may be implemented in the baseband apparatus 123. The baseband apparatus 123 includes a processor 124 and a memory 125.

The baseband apparatus 123 may include, for example, at least one baseband board, where multiple chips are disposed on the baseband board. As shown in FIG. 12, one chip is, for example, the processor 124, which is connected to the memory 125, so as to invoke a program in the memory 125 to perform operations of the network device shown in the foregoing method embodiment.

The baseband apparatus 123 may further include a network interface 126, configured to exchange information with the radio frequency apparatus 122. For example, the interface is a common public radio interface (common public radio interface, CPRI for short).

Specifically, the network side device in this embodiment of this application further includes an instruction or a program stored in the memory 125 and executable on the processor 124. The processor 124 invokes the instruction or the program in the memory 125 to perform the method performed by the modules shown in FIG. 9, and a same technical effect is achieved. To avoid repetition, details are not described herein again.

The embodiment of the present application also provides a readable storage medium, the readable storage medium stores programs or instructions, the readable storage medium may be non-transitory, and each process of the embodiment of the above information feedback method or each process of the embodiment of the above-mentioned information sending method is realized when the programs or instructions are executed by the processor, and this can achieve the same technical effect. To avoid repetition, details are not repeated here.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of the present application further provides a chip, the chip includes a processor and a communications interface, the communications interface is coupled to the processor, and the processor is configured to execute the program or instruction of the network side device to perform each process of the above embodiment of the information feedback method is performed, or perform each process of the above embodiment of the information sending method, and the same technical effects can be achieved. To avoid repetition, details are not described herein again.

It should be understood that the chip mentioned in this embodiment of this application may also be referred to as a system-level chip, a system chip, a chip system, or an on-chip system chip.

The embodiment of the present application further provides a computer program product, the computer program product is stored in a storage medium, and the computer program product is executed by at least one processor, so as to perform each process of the above embodiment of the information feedback method is performed, or perform each process of the above embodiment of the information sending method, and the same technical effect can be achieved. To avoid repetition, details are not repeated here.

It should be noted that in this specification, the term "include", "comprise", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially, or the part contributing to the prior art may be implemented in a form of a program product. The computer program is stored in a storage medium (for example, a ROM/RAM, a magnetic disk, or a compact disc), and includes multiple instructions for instructing a terminal (which may be a mobile phone, a computer, a server, a network device, or the like) to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. An information feedback method, performed by a terminal, comprising:
receiving at least one piece of downlink control information DCI;
dividing, into multiple PDSCH subsets, a physical downlink shared channel PDSCH set scheduled by each DCI;
determining a downlink assignment index DAI corresponding to each of the PDSCH subsets; and
feeding back a hybrid automatic repeat request acknowledgement HARQ-ACK for the multiple PDSCH subsets according to the DAI corresponding to each of the PDSCH subsets.

2. The method according to claim 1, wherein a counting granularity of the DAI is a PDSCH subset.

3. The method according to claim 1, wherein the feeding back a hybrid automatic repeat request acknowledgement HARQ-ACK for the multiple PDSCH subsets comprises any one of the following:
performing HARQ-ACK feedback for the multiple PDSCH subsets at a single feedback position; and
performing HARQ-ACK feedback for the multiple PDSCH subsets at different feedback positions.

4. The method according to claim 3, wherein in a case that HARQ-ACK feedback is performed for the multiple PDSCH subsets at a single feedback position, the DCI comprises a first DAI indication field, the first DAI indication field is used to indicate a DAI corresponding to a first PDSCH subset, and the first PDSCH subset is one of the multiple PDSCH subsets.

5. The method according to claim 4, wherein the first PDSCH subset is any one of the following scheduled by the DCI: the 1st PDSCH subset, the last PDSCH subset, and a PDSCH subset of a preset index.

6. The method according to claim 4, wherein DAIs corresponding to other PDSCH subsets in the multiple PDSCH subsets except the first PDSCH subset are derived based on a predefined rule and the DAI corresponding to the first PDSCH subset.

7. The method according to claim 3, wherein in a case that HARQ-ACK feedback is performed for the multiple PDSCH subsets at a single feedback position, the DCI comprises a second DAI indication field, and the second DAI indication field is used to indicate DAIs corresponding to at least two PDSCH subsets among the multiple PDSCH subsets.

8. The method according to claim 7, wherein the second DAI indication field is used to indicate the DAI corresponding to each PDSCH subset among the multiple PDSCH subsets.

9. The method according to claim 3, wherein in a case that HARQ-ACK feedback is performed for the multiple PDSCH subsets at different feedback positions, the DCI comprises a third DAI indication field; the third DAI indication field is used to indicate a DAI corresponding to each PDSCH subset among the multiple PDSCH subsets, or the third DAI indication field is used to indicate a DAI corresponding to each of the different feedback positions.

10. The method according to claim 9, wherein a DAI corresponding to each feedback position is: a DAI corresponding to a second PDSCH subset of each feedback position, and the second PDSCH subset is any one of the following: the 1st PDSCH subset, the last PDSCH subset, and a PDSCH subset of a preset index.

11. The method according to claim 9, wherein DAIs corresponding to other PDSCH subsets in the multiple PDSCH subsets except the second PDSCH subset are derived based on a predefined rule and the DAI corresponding to the second PDSCH subset.

12. The method according to claim 9, wherein the PDSCH subset and the feedback position have a one-to-one relationship, or the PDSCH subset and the feedback position have a many-to-one relationship.

13. The method according to claim 1, wherein each PDSCH in each of the PDSCH subsets corresponds to independent HARQ-ACK bit information, or each of the PDSCH subsets corresponds to unified HARQ-ACK bit information.

14. The method according to claim 1, wherein the dividing, into multiple PDSCH subsets, a physical downlink shared channel PDSCH set scheduled by each DCI comprises:
dividing, into the multiple PDSCH subsets according to first information, the PDSCH set scheduled by each DCI;
wherein the first information comprises any one of the following:
a quantity of PDSCHs in each PDSCH subset; and
a quantity of bits of HARQ-ACK feedback corresponding to a PDSCH set scheduled by each DCI.

15. The method according to claim 14, wherein the quantity of PDSCHs in each PDSCH subset is determined based on at least one of the following:
information predefined by a protocol;
configuration information from a network side device; and
a subcarrier spacing SCS;
or
the quantity of bits of HARQ-ACK feedback corresponding to a PDSCH set scheduled by each DCI is determined based on at least one of the following:
information predefined by a protocol;
configuration information from a network side device; and
an SCS.

16. An information sending method, performed by a network side device, comprising:
sending at least one piece of DCI to a terminal;
wherein the at least one piece of DCI is used by the terminal to divide, into multiple PDSCH subsets, a PDSCH set scheduled by each DCI, determine a DAI corresponding to each of the PDSCH subsets, and feed back a HARQ-ACK for the multiple PDSCH subsets according to the DAI corresponding to each of the PDSCH subsets.

17. The method according to claim 16, wherein the DCI satisfies any one of the following:
in a case that HARQ-ACK feedback is performed for the multiple PDSCH subsets at a single feedback position, the DCI comprises a first DAI indication field, the first DAI indication field is used to indicate a DAI corresponding to a first PDSCH subset, and the first PDSCH subset is one of the multiple PDSCH subsets;
in a case that HARQ-ACK feedback is performed for the multiple PDSCH subsets at a single feedback position, the DCI comprises a second DAI indication field, and the second DAI indication field is used to indicate DAIs corresponding to at least two PDSCH subsets among the multiple PDSCH subsets; and
in a case that HARQ-ACK feedback is performed for the multiple PDSCH subsets at different feedback positions, the DCI comprises a third DAI indication field; the third DAI indication field is used to indicate a DAI corresponding to each PDSCH subset among the multiple PDSCH subsets, or the third DAI indication field is used to indicate a DAI corresponding to each of the different feedback positions.

18. The method according to claim 16, wherein the method further comprises:
determining a new data indicator NDI corresponding to each of the PDSCH subsets; wherein the NDI is sent to the terminal through the at least one piece of DCI.

19. An information feedback apparatus, applied to a terminal, comprising:
a receiving module, configured to receive at least one piece of DCI;
a division module, configured to divide, into multiple PDSCH subsets, a PDSCH set scheduled by each DCI;
a first determining module, configured to determine a DAI corresponding to each of the PDSCH subsets; and
a feedback module, configured to feed back a HARQ-ACK for the multiple PDSCH subsets according to the DAI corresponding to each of the PDSCH subsets.

20. The apparatus according to claim 19, wherein a counting granularity of the DAI is a PDSCH subset.

21. The apparatus according to claim 19, wherein the feedback module is specifically configured to perform any one of the following:
performing HARQ-ACK feedback for the multiple PDSCH subsets at a single feedback position; and
performing HARQ-ACK feedback for the multiple PDSCH subsets at different feedback positions.

22. The apparatus according to claim 21, wherein in a case that HARQ-ACK feedback is performed for the multiple PDSCH subsets at a single feedback position, the DCI comprises a first DAI indication field, the first DAI indication field is used to indicate a DAI corresponding to a first PDSCH subset, and the first PDSCH subset is one of the multiple PDSCH subsets.

23. The apparatus according to claim 21, wherein in a case that HARQ-ACK feedback is performed for the multiple PDSCH subsets at a single feedback position, the DCI comprises a second DAI indication field, and the second DAI indication field is used to indicate DAIs corresponding to at least two PDSCH subsets among the multiple PDSCH subsets.

24. The apparatus according to claim 21, wherein in a case that HARQ-ACK feedback is performed for the multiple PDSCH subsets at different feedback positions, the DCI comprises a third DAI indication field; the third DAI indication field is used to indicate a DAI corresponding to each PDSCH subset among the multiple PDSCH subsets, or the third DAI indication field is used to indicate a DAI corresponding to each of the different feedback positions.

25. The apparatus according to claim 19, wherein each PDSCH in each of the PDSCH subsets corresponds to independent HARQ-ACK bit information, or each of the PDSCH subsets corresponds to unified HARQ-ACK bit information.

26. An information sending apparatus, applied to a network side device and comprising:
a sending module, configured to send at least one piece of DCI to a terminal;
wherein the at least one piece of DCI is used by the terminal to divide, into multiple PDSCH subsets, a PDSCH set scheduled by each DCI, determine a DAI corresponding to each of the PDSCH subsets, and feed back a HARQ-ACK for the multiple PDSCH subsets according to the DAI corresponding to each of the PDSCH subsets.

27. The apparatus according to claim 26, wherein the DCI satisfies any one of the following:
in a case that HARQ-ACK feedback is performed for the multiple PDSCH subsets at a single feedback position, the DCI comprises a first DAI indication field, the first DAI indication field is used to indicate a DAI corresponding to a first PDSCH subset, and the first PDSCH subset is one of the multiple PDSCH subsets;
in a case that HARQ-ACK feedback is performed for the multiple PDSCH subsets at a single feedback position, the DCI comprises a second DAI indication field, and the second DAI indication field is used to indicate DAIs corresponding to at least two PDSCH subsets among the multiple PDSCH subsets; and
in a case that HARQ-ACK feedback is performed for the multiple PDSCH subsets at different feedback positions, the DCI comprises a third DAI indication field; the third DAI indication field is used to indicate a DAI corresponding to each PDSCH subset among the multiple PDSCH subsets, or the third DAI indication field is used to indicate a DAI corresponding to each of the different feedback positions.

28. A terminal, comprising a processor, a memory, and a program or an instruction stored in the memory and executable on the processor, wherein when the program or instruction is executed by the processor, steps of the information feedback method according to any one of claims 1 to 15 are implemented.

29. A network side device, comprising a processor, a memory, and a program or an instruction stored in the memory and executable on the processor, wherein when the program or instruction is executed by the processor, steps of the information sending method according to any one of claims 16 to 18 are implemented.

30. A readable storage medium, storing a program or an instruction in the readable storage medium, wherein when the program or instruction is executed by a processor, steps of the information feedback method according to any one of claims 1 to 15 are implemented, or steps of the information sending method according to any one of claims 16 to 18 are implemented.

31. A chip, comprising a processor and a communications interface, wherein the communications interface is coupled to the processor, and the processor is configured to execute a program or an instruction of a network device to implement steps of the information feedback method according to any one of claims 1 to 15, or steps of the information sending method according to any one of claims 16 to 18.

32. A computer program product, wherein the computer program product is stored in a storage medium, and the computer program product is executed by at least one processor to implement steps of the information feedback method according to any one of claims 1 to 15, or steps of the information sending method according to any one of claims 16 to 18.
